# EUROPEAN PATENT SPECIFICATION

(11) **EP 2 169 204 B1**
(45) Date of publication and mention of the grant of the patent: **23.11.2011**
(21) Application number: 09252266.3
(22) Date of filing: 24.09.2009
(51) Int. Cl.: F02K 1/76, F16H 25/20

(54) **Actuator**
Stellantrieb
Actionneur

(30) Priority: 29.09.2008 GB 0817775; 27.11.2008 GB 0821678; 15.04.2009 GB 0906400
(43) Date of publication of application: 31.03.2010
(73) Proprietor: Goodrich Actuation Systems Ltd., Solihull B90 4LA (GB)
(72) Inventor: Somerfield, Michael Paul, Stoke on Trent ST7 2LG (GB); Thompson, Alan M., Newark NG22 0GT (GB)
(74) Representative: Bailey, Richard Alan

(56) References cited:
- EP-A- 0 076 750
- WO-A-2004/113707
- US-A- 3 655 134
- US-A- 5 135 442
- US-A1- 2002 119 737

## Description

This invention relates to an actuator, and in particular to an actuator suitable for use in a thrust reverser system for an aircraft.

It is commonplace to provide each engine of an aircraft with a thrust reverser system to assist in the deceleration of the aircraft on landing. A typical thrust reverser system comprises a series of movable components each of which is driven between a stowed, inactive position and a deployed, operative position by associated actuators when deployment of the thrust reverser system is instructed, for example by a control unit controlling operation of the engine. Typically four or six such actuators are provided. Traditionally, the actuators used in such applications have taken the form of linear hydraulic actuators. However, such actuators are typically heavy. Further, the need to provide high pressure pipe work between the actuators and the associated pumps adds additional weight and complexity to the system.

Rather than use hydraulic actuators, it is known to use electrically driven actuators. One form of such an actuator is described in US 5960626 and comprises an electrically powered motor, the output shaft of which drives an input of a linear screw actuator. The provision of separate motors associated with each actuator has significant weight penalties and the control arrangement necessary to ensure that all of the actuators associated with the thrust reverser system operate in synchronism is also required to be of complex form.

To reduce the weight and complexity of such arrangements, it is known to transmit drive to several actuators from a single motor, for example using flexible drive shafts and associated gearboxes. An arrangement of this type is described in US 4522358, this arrangement using a hydraulic motor.

Where gearboxes are provided, the gears are lubricated to reduce wear and improve the performance of the gearbox. The lubricants used in such applications become extremely viscous when at low temperatures. Where an aircraft has been at high altitude for a relatively long period of time, the lubricant temperature may fall to a very low temperature, for example, approximately -50°C. The viscosity of the lubricant at such low temperatures is sufficient to cause significant drag within the gearbox which must be overcome by the operation of the motor. Where driven by linear hydraulic actuators, these loads are relatively easy to accommodate as sufficient excess hydraulic power to overcome the drag loads is present. However, where electrically powered motors are used, the motor and associated control equipment is typically required to be of increased size, to ensure that the drag loads can be accommodated, increasing the cost of the system and incurring additional weight penalties due to the requirement for the components driven by the higher power capability of the motor to be larger and heavier to resist damage from potentially greater loads. Further, the lubricant itself adds to the maintenance requirements and weight of the system.

The gearboxes used in such systems typically use straight-toothed bevel gears. Such gears are advantageous in that relatively little sliding contact occurs between the teeth in use, most contact being rolling contact, with the result that when properly lubricated they can remain in a serviceable condition for a long time. However, if operated under load for significant periods of time with inadequate lubrication, considerable wear occurs. Further, in order to correctly locate the gears it is important to ensure that the two axes of rotation are accurately positioned relative to one another, and that the axial positions of the gears are correct. Assembly is thus complex. Additionally, the bearings supporting the gears have to be able to withstand the separating loads which are generated between the gears when large torques are transmitted therebetween. As a result, the bearings are larger and heavier than would otherwise be the case.

Rather than use straight-toothed bevel gears, spiral bevel gears are increasingly being used in some applications as they are quieter running and more readily available. However, they are susceptible to considerable levels of wear when inadequately lubricated and, unlike straight-toothed arrangements, are not of good bidirectional efficiency.

The closest prior art document WO2004/113707, EP0076750 and US3655134 all describe arrangements in which bevel gears are used in a drive transmission arrangement.

US 5135442 describes a drive transmission arrangement for a helicopter which incorporates face gears.

It is an object of the invention to provide an actuator in which at least some of the disadvantages set out hereinbefore are overcome or are of reduced effect.

According to the present invention there is provided an electric motor operable actuator comprising a gear arrangement operatively connected to a rotatable input of a linearly extendable actuator device, the lineally extendable actuator device comprising a screw jack device, characterised in that the gear arrangement comprises a pinion gear and a face gear in meshing engagement with the pinion gear, the gear arrangement comprising a dry running gear arrangement.

The use of such a gear arrangement is advantageous in that assembly is simplified and that torque transmission results in the application of fewer axial or side loadings to the gears, thus permitting a reduction in the size of the associated bearings.

The face gear conveniently includes a series of co-planar teeth, each of which extends radially of the face gear. The tip of each tooth is preferably of tapering width, tapering from a maximum close to the axis of rotation of the face gear to a minimum remote therefrom. The root of each tooth preferably tapers in thickness from a maximum remote from the axis of rotation to a minimum closer to the axis of rotation.

The absence of lubricant is advantageous in that the low temperature viscosity problems are eliminated allowing a smaller motor to be used. Further, maintenance requirements are reduced and the weight of the lubricant is saved.

Preferably the screw jack device incorporates dry running and/or sealed for life bearings, thereby reducing servicing of the actuator.

Convenienly a single motor is arranged to transmit drive to several actuators. Flexible drive shafts may be used in the transmission of drive to the actuators.

The gear arrangement preferably provides a reduction in rotary speed, for example by a factor of around 2. Thus, the motor may be arranged to rotate at a speed of around 7000 rpm whilst the input of the linearly extendable actuator device may be driven at a speed of around 3500 rpm.

The invention will further be described, by way of example, with reference to the accompanying drawings, in which:
Figures 1 and 2 are sectional views illustrating an actuator in accordance with an embodiment of the invention; and
Figure 3 is a perspective view of the face gear of the embodiment shown in Figures 1 and 2.

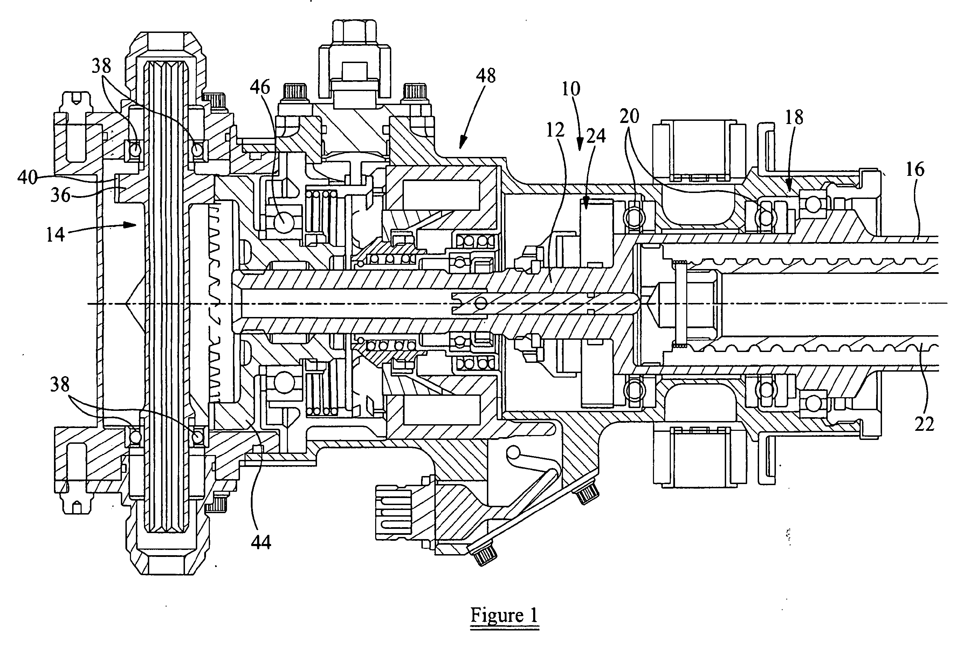

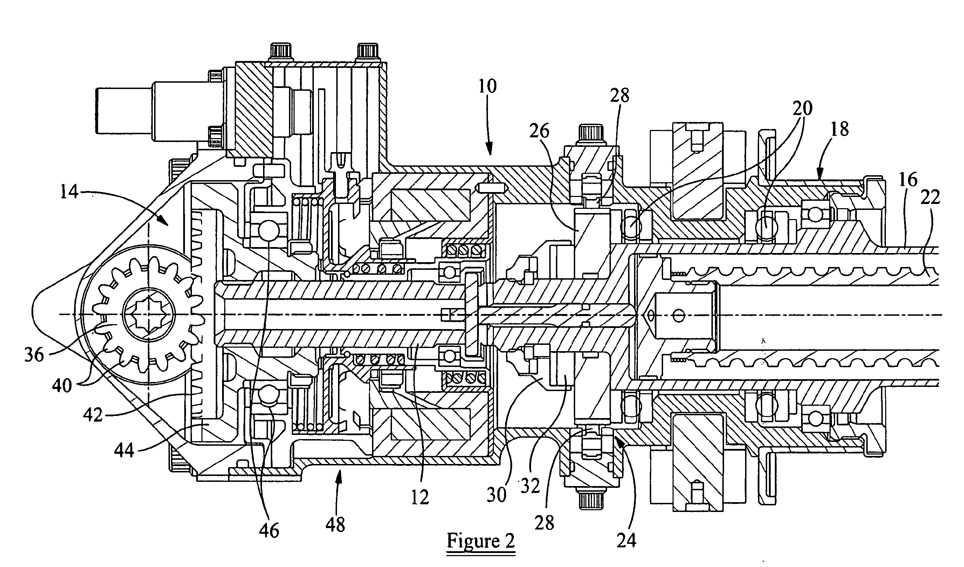

The actuator illustrated in Figures 1 and 2 comprises a linearly extendible actuator device in the form of a screw jack 10 having a rotary drive input 12 to which drive is supplied, in use, through a gear arrangement 14. The screw jack 10 comprises a nut component 16, only part of which is visible in the accompanying drawings, which is formed integrally with or rigidly secured to the drive input 12 and supported for rotation within a housing 18 by means of bearings 20. The bearings 20 serve not only to support the nut component 16 for rotation, but also serve as thrust bearings, limiting axial movement of the nut component 16. The bearings 20 are preferably of dry-running or sealed-for-life form, and thus do not require lubrication during servicing.

An output shaft 22 is in threaded engagement with the nut component via a ball or roller screw coupling (not shown). The shaft 22 is mounted to a component to be driven for movement by the actuator, the mounting of the shaft 22 being such that it is held against angular movement.

In use, rotation of the drive input 12 and nut component 16 causes axial movement of the shaft 22, thereby driving the component to which the shaft 22 is mounted for movement between its stowed and deployed positions.

A no-back device 24 is provided, the no-back device 24 being arranged to allow substantially unrestricted rotational movement of the drive input 12 and nut component 16 in one rotary direction, but to apply a braking load to resist externally applied aiding loads acting on the actuator in the reverse direction. The no-back device 24 comprises a stainless steel ratchet disc 26 which encircles the drive input 12. The ratchet disc 26 is formed, about its periphery, with a series of ratchet teeth with which pawls 28 pivotally mounted to the housing 18 are engageable. A flange arrangement 30 is mounted upon the drive input 12 so as to be rotatable therewith, a carbon brake disc 32 being interposed between the arrangement 30 and the ratchet disc 26. In use, the carbon brake disc 32 engages the ratchet disc 26, urging the ratchet disc 26 to rotate with the drive input 12. As a result, rotation of the drive input 12 in a first direction results in rotation of the ratchet disc 26, such movement being permitted by the pawls 28, the pawls riding up and over the ratchet teeth of the ratchet disc 26 when the ratchet disc 26 rotates in this direction.

When the drive input 12 is rotated in the reverse direction, it will be appreciated that rotation of the ratchet disc 26 is resisted by the engagement of the pawls 28 with the ratchet teeth of the ratchet disc 26. Rotation of the drive input 12 in this reverse direction is thus resisted by the braking load resulting from the engagement of the brake disc 32 with the ratchet disc 26.

The no-back device 24 is intended to be of dry-running, non-lubricated form. In order to withstand the wear and high temperatures which may occur in use, the ratchet disc 26 is conveniently of Pyrowear® (Carpenter Technology Corp.) or a similar material having a high degree of hardness and a capability for maintaining those qualities during high temperature operation.

As described in co-pending British Patent Application Nos. 0817775.0 and 0821678.0, a lock arrangement 48 may be provided to secure the drive input 12 against rotation, thereby locking the actuator 10 against movement, other than when desired.

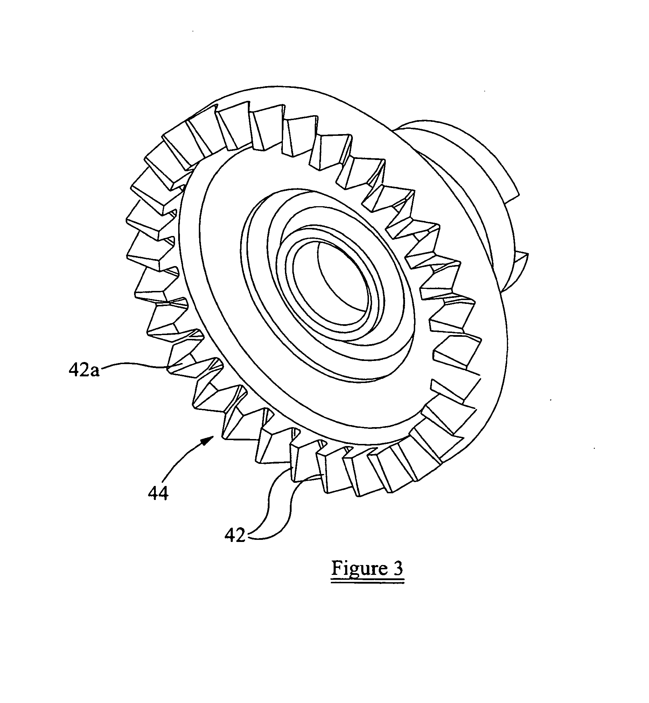

The gear arrangement 14 comprises a pinion gear 36 supported by bearings 38 for rotation relative to the housing 18. Although not illustrated, the pinion gear 36 is arranged to be driven for rotation by a flexible drive shaft which, in turn, is driven for rotation by an associated electric motor. The motor may also be used to drive a number of actuators 10. The pinion gear 36 includes teeth 40 which mesh with the teeth 42 provided on a face gear 44. The face gear 44 is illustrated most clearly in Figure 3. As shown in Figures 1 and 2, the face gear 44 is splined or otherwise secured to the drive input 12 such that rotation of the pinion gear 36 and face gear 44 is transmitted to the drive input 12. Bearings 46 support the face gear 44 for rotation. The bearings 46 are conveniently of dry-running or sealed-for-life form.

The face gear 44 includes an end face 44a of planar form in which the teeth 42 are formed by machining, for example using a technique similar to that described in US 5823857. Each tooth 42 extends radially, the teeth being co-planar with one another, and is profiled in such a manner as to achieve meshing with the teeth 40 of the pinion gear 36. As shown in Figure 3, the tip of tooth 42 tapers from a maximum width at its end closest to the axis of rotation to a minimum at its end furthest from the axis of rotation. The root of each tooth 42 tapers in width in the opposite direction. It will thus be appreciated that the teeth 42 are of relatively complex profile.

The gear arrangement 14 comprising the pinion gear 36 and face gear 44 is a dry running, non lubricated gear arrangement. It will thus be appreciated that unlike many common gear arrangements, the part of the housing 18 containing the pinion gear 36 and face gear 44 is not provided with lubricating grease or the like. The absence of lubricating grease or other lubricant materials in this part of the housing 18 is advantageous in that the problems resulting from the viscosity of the lubricant material increasing at low temperatures, thereby causing drag, are avoided. As a result, the motor used to drive the actuator 10, and the associated control arrangement, can be of reduced size and power output allowing further weight savings to be made in the actuators, linkages and other components driven by the motor. Additionally, maintenance requirements are reduced and the weight of the lubricants is saved.

In addition to the system weight savings that can be made by using an actuator including a face gear arrangement, the arrangement 14 of the invention has other advantages. For example, assembly of the gear arrangement is simplified as accurate adjustment of the gears is only required along a single axis. The axial position of the pinion gear 36 is not critical to the operation of the gear arrangement, thus only the axial position of the face gear 44 requires accurate positioning. Further; in use, there are no axial separating forces applied to the pinion gear 36 thus the provision of bearings countering such movement can be avoided. Similarly, the application of significant side loadings on the face gear 44 during torque transmission is avoided thus the bearings 46 associated with the face gear can be of reduced size, providing further weight savings. Additionally, servicing and maintenance procedures are simplified.

The ability to run the gear arrangement 14 without lubricant largely arises from the fact that with such a gear arrangement the contact between the pinion gear 36 and the face gear 44 is primarily a rolling contact, virtually no rubbing or sliding contact occurring between the teeth. In other words, the relative velocities of the contacting surfaces of the pinion gear 36 and face gear 44 are substantially zero throughout the period of contact therebetween. The absence of sliding or rubbing contact between the pinion gear 36 and face gear 44 allows the running of the gear arrangement 14 without lubricant and this results in reduced drag.

It is currently envisaged that, in use, the pinion gear 36 will be rotated at speeds of approximately 7000 rpm. The gear arrangement 14 provides a 2:1 reduction in speed, thus the face gear 44 and drive input 12 of the actuator 10 will typically be driven at speeds of approximately 3500 rpm. To achieve this reduction, it is envisaged that the pinion gear will have 16 teeth whilst the face gear will have 31 teeth. However this need not always be the case.

A range of modifications and alterations to the arrangement described hereinbefore may be made without departing from the scope of the invention.

## Claims

1. An electric motor operable actuator comprising a gear arrangement (14) operatively connected to a rotatable input (12) of a linearly extendable actuator device (10), the linearly extendable actuator device (16) comprising a screw jack device, **characterised in that** the gear arrangement (14) comprises a pinion gear (36) and a face gear (44) in meshing engagement with the pinion gear (36), the gear arrangement (14) is a dry running gear arrangement.

2. An actuator according to Claim 1, wherein the face gear (44) includes a series of teeth (42), each of which extends radially of the face gear (44).

3. An actuator according to Claim 2, wherein the tip of each tooth (42) tapers in width from a maximum relatively close to an axis of rotation of the face gear (44) to a minimum remote therefrom.

4. An actuator according to Claim 2 or Claim 3. wherein the root of each tooth (42) tapers In width from a minimum relatively close to the axis of rotation of the face gear (44) to a maximum remote therefrom.

5. An actuator according to any of the preceding claims, wherein the screw jack device incorporates dry running and/or sealed-for-life bearings (20, 46).

6. An actuator according to any of the preceding claims, wherein the screw jack device includes a dry running no-back device (24).

7. An actuator according to any of the preceding claims, further comprising a motor arranged to transmit drive to the actuator and to at least one further actuator.

## Patentansprüche

1. Durch einen elektrischen Motor betätigbarer Aktuator, umfassend eine Getriebeanordnung (14), die betriebsfähig mit einem drehbaren Eingang (12) einer geradlinig dehnbaren Aktuatorvorrichtung (10) verbunden ist, wobei die geradlinig dehnbare Aktuatorvorrichtung (16) eine Schraubenwindenvorrichtung umfasst, **dadurch gekennzeichnet, dass** die getriebeanordnung (14) ein Antriebsritzel (36) und ein Kronenrad (44), das sich in Zahneingriff mit dem Antriebsritzel (36) befindet, umfasst, wobei die Getriebeanordnung (14) eine trockenlaufende Getriebeanordnung ist.

2. Aktuator nach Anspruch 1, wobei das Kronenrad (44) eine Reihe Zähne (42) einschliesst, wobei sich jeder davon radial in Bezug auf das Kronenrad (44) erstreckt.

3. Aktuator nach Anspruch 2, wobei sich der Kopf jedes Zahns (42) in der Breite von einem Maximum, das ziemlich nahe an einer Rotationsachse des Kronenrads (44) liegt, zu einem Minimum, das entfernt davon liegt, verjüngt.

4. Aktuator nach Anspruch 2 oder 3, wobei sich der Fuss jedes Zahns (42) in der Breite von einem Minimum, das ziemlich nahe an der Rotationsachse des Kronenrads (44) liegt, zu einem Maximum, das entfernt davon liegt, verjüngt.

5. Aktuator nach einem der vorhergehenden Ansprüche, wobei die Schraubenwindenvorrichtung trockenlaufende und/oder dauergeschmierte Lager (20, 46) enthält.

6. Aktuator nach einem der vorhergehenden Ansprüche, wobei die Schraubenwindenvorrichtung eine trockenlaufende Rücklaufsperrvorrichtung (24) einschliesst.

7. Aktuator nach einem der vorhergehenden Ansprüche, ferner umfassend einen Motor, der angeordnet ist, um dem Aktuator und mindestens einem weiteren Aktuator Antrieb zu verleihen.

## Revendications

1. Actionneur à fonctionnement par moteur électrique, comprenant un arrangement d'engrenage (14), connecté de manière opérationnelle à une entrée rotative (12) d'un dispositif d'actionneur à extension linéaire (10), le dispositif d'actionneur à extension linéaire (16) comprenant un dispositif de vérin, **caractérisé en ce que** l'arrangement d'engrenage (14) comprend un engrenage à pignons (36) et une couronne dentée (44) en prise avec l'engrenage à pignons (36), l'arrangement d'engrenage (14) étant un arrangement d'engrenage fonctionnant à sec.

2. Actionneur selon la revendication 1, dans lequel la couronne dentée (44) inclut une série de dents (42) s'étendant chacune radialement par rapport à la couronne dentée (44).

3. Actionneur selon la revendication 2, dans lequel l'extrémité de chaque dent (42) s'amincit en largeur d'un maximum relativement proche d'un axe de rotation de la couronne dentée (44) à un minimum qui en est éloigné.

4. Actionneur selon la revendication 2 ou 3, dans lequel la base de chaque dent (42) s'amincit en largeur d'un minimum relativement proche de l'axe de rotation de la couronne dentée (44) à un maximum qui en est éloigné.

5. Actionneur selon l'une quelconque des revendications précédentes, dans lequel le dispositif de vérin contient des roulements fonctionnant à sec et/ou graissés à vie (20, 46).

6. Actionneur selon l'une quelconque des revendications précédentes, dans lequel le dispositif de vérin inclut un dispositif anti-retour (24) fonctionnant à sec.

7. Actionneur selon l'une quelconque des revendications précédentes, comprenant en outre un moteur agencé pour transmettre la force d'entraînement à l'actionneur et à au moins un autre actionneur.
